# EUROPEAN PATENT SPECIFICATION

(11) **EP 0 676 521 B1**
(45) Date of publication and mention of the grant of the patent: **24.11.1999**
(21) Application number: 95106804.8
(22) Date of filing: 24.09.1991
(51) Int. Cl.: E05C 19/02, G11B 33/04

(54) **Lock mechanism and latch device**
Verschlussmechanismen und Sperrvorrichtung
Mécanisme de fermeture et dispositif de verrouillage

(30) Priority: 27.09.1990 JP 25830690; 13.11.1990 JP 30687890; 13.11.1990 JP 30687990; 30.11.1990 JP 34066990
(43) Date of publication of application: 11.10.1995
(62) Divisional of application: 91116242.8
(73) Proprietor: NIFCO INC., Yokohama-shi Kanagawa-ken (JP)
(72) Inventor: Kurosaki, Matsuo, Toyota-shi, Aichi-ken (JP)
(74) Representative: Goddar, Heinz J., Dr.

(56) References cited:
- GB-A- 2 134 961
- US-A- 3 156 493
- US-A- 3 189 374

## Description

### Field of the Invention:

The present invention relates to a lock mechanism in which, by pressing an openable cover of an audio apparatus, an audio-apparatus accommodating case or the like, or an openable member of such as a door of a box or the like, the openable cover or member is engaged with or disengaged from a main body, and to a latch device in which a latch body is retained in a pushed-in state or a withdrawn state in a housing so as to be provided with the same function as that of the lock mechanism.

### Description of the Related Art:

In a typical audio apparatus or the like, a latch device is provided on an openable cover so as to retain the openable cover.

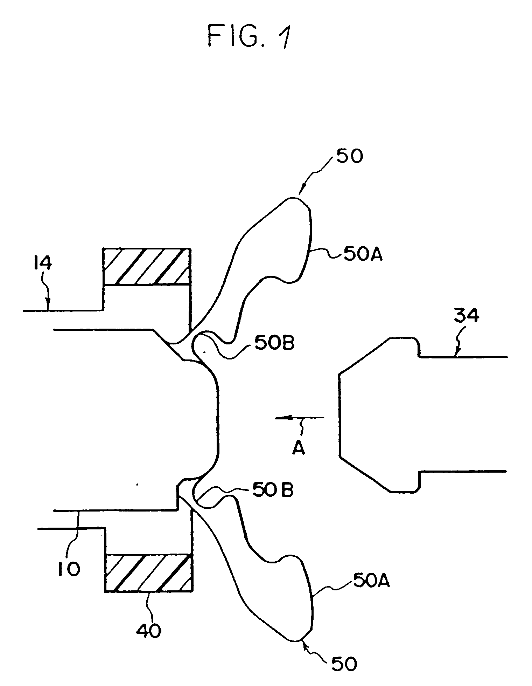

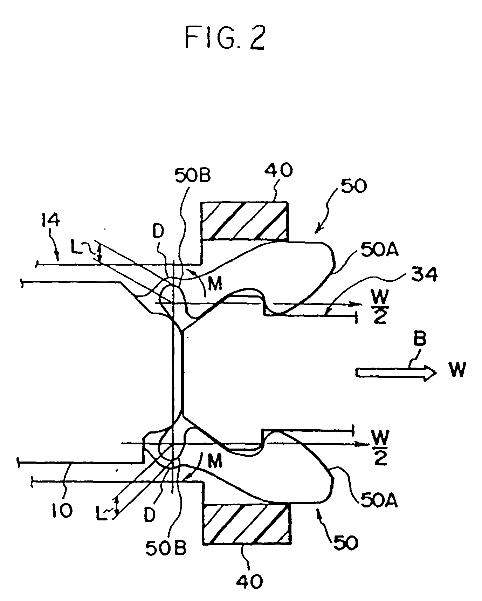

As shown in the Fig. 1 and 2, the latch device is arranged such that each time a latch body 10 is pressed by a striker 34 in the direction of arrow A, a tracing member provided in a housing 14 moves halfway in a heart-shaped circulatory cam groove formed in the latch body 10, thereby allowing the latch body 10 to be retained in the housing 14 alternatively in a state in which the latch body 10 is pushed in and in a state in which it is withdrawn. Concurrently, as shown in Fig. 2, while a pair of arms 50 formed on the latch body 10 are respectively being pressed by a pair of rectangular frames 40 of the housing 14, the striker 34 fixed to the openable cover is clamped or released, thereby setting the openable cover in a closed state or in an openable state.

As shown in Figs. 1 and 2, each of the arms 50, which are generally provided on the latch body 10, comprises a holder portion 50A for clamping the striker 34 and a hinge portion 50B serving as a center of rotation of the holder portion 50A. The arms 50 are formed of a flexible material such as nylon so as to facilitate the bending of the hinge portions 50B and reduce their frictional resistance with respect to the rectangular frames 40.

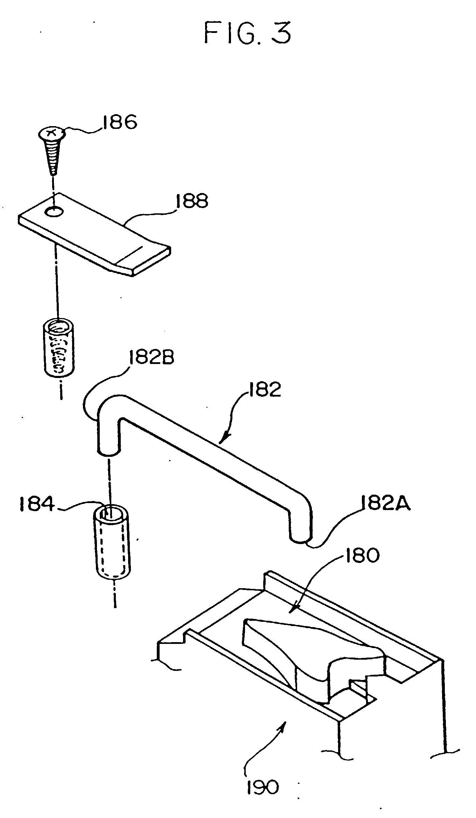

In a typical latch device such as the one shown in Fig. 3, a rear end portion 182B of a tracing member 182 moving in a circulatory cam groove 180 in a circulatory manner is rotatably inserted in a fitting hole 184 formed in the unillustrated housing. In addition, the tracing member 182 is pressed by a pressing leaf spring 188 secured to the housing by means of a screw 186 such that the tracing member 182 will not come off the fixing hole 184.

However, with the above-described structure for fitting the tracing member 182, the tracing member 182 cannot be fit in the housing from the outside thereof. For this reason, it has been necessary to fixedly hold the tracing member in the housing in advance, and then to allow a tip portion 182A of the tracing member 182 to be fitted into the circulatory cam groove 180 formed in a latch body 190 which is inserted into the rear portion of the housing.

For this reason, in the event that the tip portion 182A of the tracing member 182 is shaken during the assembling operation, the tip portion 182A cannot be inserted into the circulatory cam groove 180, and the tip portion 182A of the tracing member 182 is brought into contact with a different portion of the latch body 190. Hence, a drawback has been encountered in that the latch body 190 cannot be inserted into the housing, so that the assembling of the latch device has been troublesome. In addition, a pressing member (e.g., a pressing leaf spring 188) is required for pressing the tracing member 182, with the result that the number of component parts used disadvantageously increases and the assembling efficiency has been low.

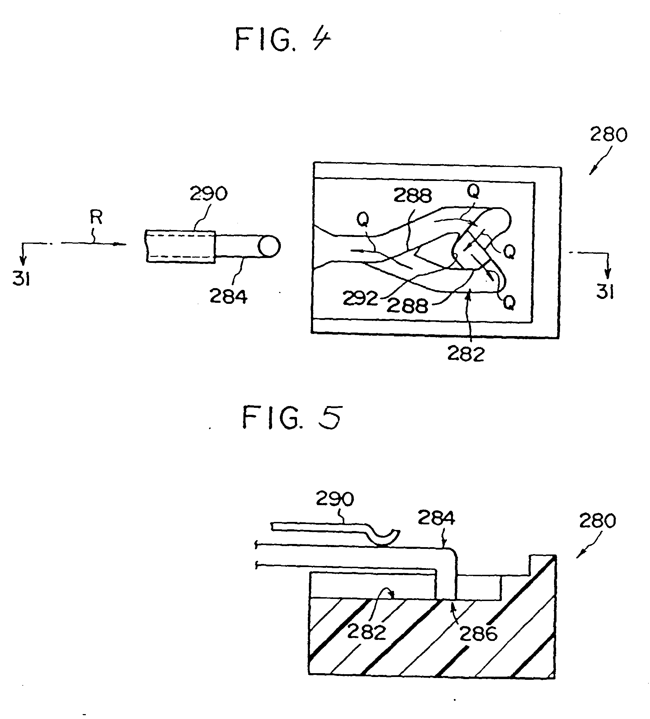

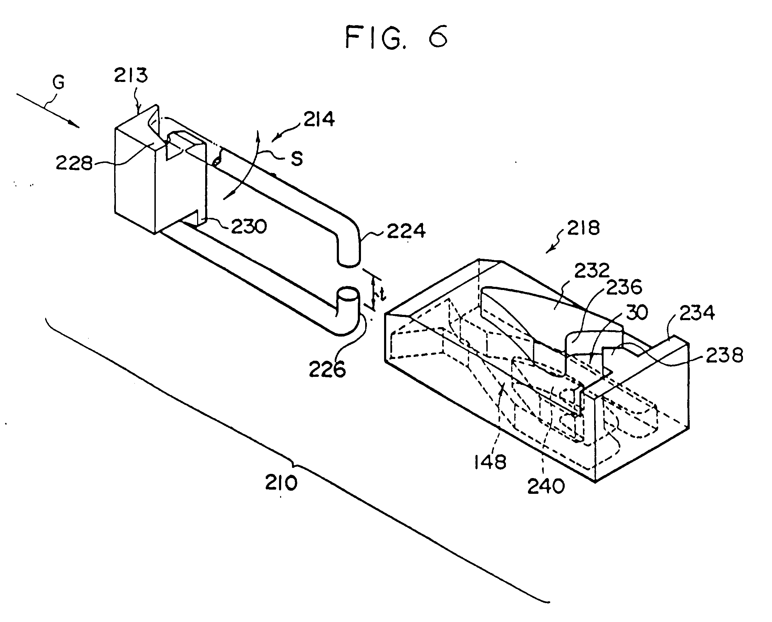

A similar device, e.g. provided with a push-open type ash-pan in an automobile, is shown in Figs. 4 and 5.

This push-open type ash pan is provided with a lock mechanism 280 as shown in Fig. 4. This lock mechanism 280 is arranged as follows: If a front face portion of the unillustrated ash pan is pushed in the direction of arrow R, a tracing member 284 fixed to a rear end portion of the ash pan is inserted into a heart-shaped circulatory cam groove 282 formed in a box. The inserted tracing member 284, when thus pressed, moves in the heart-shaped circulatory cam groove 282 in a circulating manner, and when the tracing member 284 engages a recessed (cusp) portion 292 of the heart-shaped circulatory cam groove 282, the tracing member 284 retains the ash pan in a state in which the ash pan is pushed in.

In the lock mechanism 280 shown in Figs. 4 and 5, stepped portions 288 are provided so that the tracing member 284 can circulate in a set direction (in the direction of arrow Q) in the circulatory cam groove 282, so as to prevent the tracing member 284 from circulating in an opposite direction. In addition, an urging means 290 is provided separately for urging a tip portion 286 of the tracing member -284 vertically toward the bottom surface of the circulatory cam groove 282 to ensure that the tracing member 284 will circulate with its tip portion 286 brought positively into sliding contact with the bottom surface of the circulatory cam groove 282.

With the mechanism in which the tip portion 286 of the tracing member 284 is caused to slide on the bottom surface of the circulatory cam groove 282, a shortcoming has been experienced in that, owing to the friction of the bottom surface of the groove with the tip portion 286 of the tracing member 284, the circulatory cam groove 282 sometimes becomes worn or deformed, and the stepped portions 288 are scraped off, thereby causing the tracing member 284 to circulate in the opposite direction.

In the state in which the ash pan is pushed in, the tracing member 284 is retained at the recessed portion 292 formed in the circulatory cam groove 282, and the state in which the ash pan is pushed in is maintained against the urging force of an unillustrated compression coil spring. However, since the urging force of the compression coil spring is supported at one recessed portion 292, the recessed portion 292 is liable to become damaged. Hence, the rupture strength of the lock mechanism 280 has been low.

In addition, since the tip portion 286 of the tracing member 284 is urged towards the bottom surface of the circulatory cam groove 282, there is a need to provide the urging means 290 separately, so that the number of component parts used disadvantageous increases and the assembling efficiency has been low.

Although the tracing member 284 is usually formed of a metal material into the shape of a lever, there have been cases where if fabrication accuracy at the time of its formation is poor, the tracing member 284 scrapes off the bottom surface of the circulatory cam groove 282, or the tracing member 284 undergoes deformation due to its frictional resistance with respect to the circulatory cam groove 282.

In the case of a latch device employing the above-described lock mechanism 280, since it is necessary to form the stepped portions 288 in the circulatory cam groove 282 provided in the latch body, and to provide the tracing member 284 with the urging means 290, the housing which accommodates the latch body and the tracing member is required to be provided with a certain thickness. For this reason, it has been difficult to make the latch device thin beyond this restriction.

In document US 3,156,493 a push button fastener is described. The document discloses a rod or a plunger, provided with a crosspin which cooperates with cam surfaces for guiding the rod upon an inwardly pushing of the plunger. The rod is resiliantly biased by a spring. Depending on the initial position of the rod and depending on how the rod will be pushed inwardly, it is not ensured that the crosspin will always pass the circulatory path, defined by said cam surfaces, in the same direction, so that misfunctions may occur.

### SUMMARY OF THE INVENTION

In view of the above circumstances, it is an object of the present invention to provide a latch device featuring a tracing-member fitting structure which allows the number of component parts used to be reduced, which facilitates the assembly of the tracing member, and which provides the trace member with a large supporting strength.

Another object of the present invention is to provide a lock mechanism having a smaller number of component parts used, capable of preventing the wear of a circulatory cam groove, and having large rupture strength.

A further object of the present invention is to provide a thin latch device making use of the lock mechanism.

In accordance with a first aspect of the present invention, a lock mechanism which has the function of causing an openable member to engage with or disengage from a main body and includes a first lock member and a second lock member is provided according to claim 1.

In accordance with a second aspect of the present invention, a latch device for causing an openable member to engage with or disengage from a main body is produced according to claim 9.

In the lock mechanism in accordance with the first aspect of the invention, when the tracing member disposed in the second lock member is inserted into a pair of circulatory guide paths provided in the first lock member, the tracing member circulates the circulatory guide paths in a fixed direction by means of its movement relative to the first lock member.

At this juncture, the tip portions of the tracing member are inserted in such a manner that they will not come into contact with the bottom surfaces of the circulatory guide paths of the first lock member, and only the side surface portions of the tip portions of the tracing member are brought into contact with the side walls of the circulatory guide paths, respectively. Therefore, the bottom surfaces of the circulatory guide paths are not worn by the tracing member. Meanwhile, since the configurations of the pair of circulatory guide paths are mutually different, the tracing member tracing the circulatory guide paths circulates the circulatory guide paths while it is pressed by the side walls of the circulatory guide paths and a resilient restoring force is hence being imparted thereby through its movement relative to the first lock member. For this reason, the tracing member is urged in the circulating direction by the resilient restoring force of the tracing member. Hence, even if stepped walls for preventing the backward movement of the tracing member in the circulatory guide paths are not provided, the tracing member circulates in the fixed direction without being moving backwardly.

Furthermore, since the tracing member is inserted in the pair of circulatory guide paths, the holding of the tracing member is effected at two portions of the second lock member.

In the latch device in accordance with the second aspect of the invention, the tracing member circulates in the circulatory guide paths each time the operation of pushing in the latch body is effected, so as to alternately hold the latch body in the state of being pushed in the housing and in the state of being withdrawn from the housing.

Since the arrangements of the tracing member and the circulatory guide paths are the same as those of the first aspect, a description of the operation will be omitted.

With the lock mechanism and the latch device in accordance with the invention, since the arrangement provided is such that the side walls of the circulatory guide paths are traced by the side surfaces of distal end portions of the tracing member, the bottom surfaces of the circulatory guide paths are prevented from becoming worn. In addition, since it is unnecessary to provide an urging means separately, the number of component parts used can be reduced.

Since the tracing movement in the opposite direction to the circulating direction is prevented by making use of the resilient restoring force of the tracing member, it is unnecessary to form steps on the circulatory guide paths, so that the overall structure can be made compact.

In addition, since the prevention of the coming off of the tracing member is effected at two portions in the circulatory guide paths, the supporting strength is large, so that the rupture strength of the lock mechanism can be increased.

### BRIEF DESCRIPTION OF THE DRAWINGS

Fig. 1 is a plan view illustrating a state before arms clamp a striker in a first conventional device;
Fig. 2 ist a plan view illustrating a state after the arms have clamped the striker in a first conventional device;
Fig. 3 ist an exploded perspective view illustrating a component-parts fitting structure of a second conventional latch device;
Fig. 4 is a plan view of a circulatory cam groove and a tracing member of a conventional lock mechanism;
Fig. 5 is a cross-sectional view of a conventional lock mechanism 280;
Fig. 6 is an overall perspective view of a lock mechanism in accordance with a first embodiment of a first aspect of the invention;
Fig. 7 ist a perspective rear view of a push-type ash pan having the lock mechanism in accordance with the first embodiment of the first aspect of the invention;
Fig. 8 to 16 are plan views of the operating state of the tracing member with respect to a circulatory guide path of the lock mechanism during one cycle in accordance with the first embodiment of the first aspect of the invention;
Fig. 17 is an overall perspective view of the lock mechanism in accordance with a second embodiment of the first aspect of the invention;
Fig. 18 ist an overall perspective view of the latch device in accordance with an embodiment of a second aspect of the invention;
Fig. 19 is a partially cut-away perspective view of the latch device in accordance with the second aspect of the invention;
Fig. 20 is a cross-sectional view of the latch device in accordance with the second aspect of the invention taken along the line 29 - 29 of Fig. 18;

### DETAILED DESCRIPTION OF THE PREFERRED EMBODIMENTS

A description will now be given of a first embodiment of a first aspect of the invention.

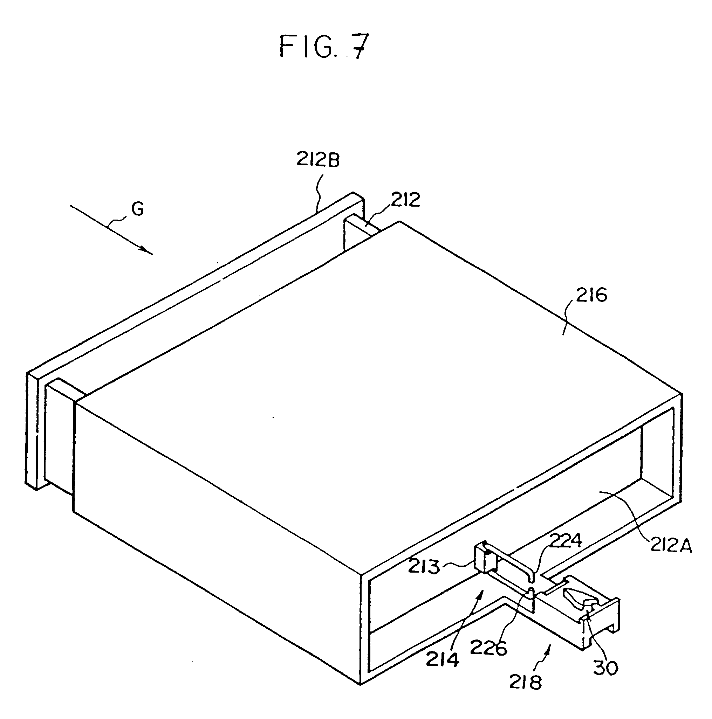

Figs. 6 and 7 illustrate a lock mechanism 210 which is applied to a push-open type ash pan in accordance with the first embodiment of the third aspect of the invention.

This lock mechanism comprises a tracing member 214 fitted on an insertion-side rear surface 212A of an ash pan case 212 (see Fig. 7) as well as a pair of circulatory cam grooves 30, 148 respectively formed on both sides of a circulatory-cam-groove fitting member 218 provided on the right-hand side of a box 216 as viewed in the drawing. The tracing member 214 is disposed on the rear surface 212A of the ash pan case 212 at a position corresponding to the circulatory cam grooves 30, 148. When a front surface 212B of the ash pan case 212 is pushed in the direction of arrow G, the tracing member 214 is adapted to be inserted into the pair of circulatory cam grooves 30, 148.

The tracing member 214 has a substantially C-shaped configuration formed by cutting off a portion of a ring. Opposite end portions of the tracing member 214 are formed as tracing portions 224, 226. The gap t between the ends of the tracing portions 224, 226 is set to be greater than the distance between the bottom surfaces of the circulatory cam grooves 30, 148. The arrangement provided is such that when the tracing portions 224, 226 of the tracing member 214 are inserted into the circulatory cam grooves 30, 148, the tracing member 214 moves in a circulating manner with the ends of the tracing portions 224, 226 not being brought into contact with the bottom surfaces of the circulatory cam grooves 30, 148, but with the tracing portions 224, 226 being brought into contact with the wall surfaces of the circulatory cam grooves 30, 148.

The tracing member 214 is supported on the rear surface 212A of the ash pan case 212 in such a manner as to be twistable in the direction of the double-headed arrow S (see Fig. 6), but retaining portions 228, 230 respectively formed in upper and lower portions of a fixing member 213 restrict the twisting motions of the tracing portions 224, 226 in the mutually closing direction.

The circulatory cam grooves 30, 148, which are respectively formed in the upper and lower surfaces of the circulatory-cam-groove fitting member 218, are provided with mutually different configurations.

The circulatory cam groove 30 shown by the solid lines has a configuration in which an upwardly projecting heart-shaped cam 232 is left uncut in a substantially central portion of the upper portion of the circulatory-cam-groove fitting member 218. A widthwise extending groove wall surface 234 is provided on the side of the circulatory-cam-groove fitting member 218 which is the insertion-end side of the tracing member 214, and a projection 238 is formed in a central portion thereof in such a manner as to project toward a recessed portion 236 of the heart-shaped cam 232.

Meanwhile, a heart-shaped cam 240, a groove wall surface 242, and a projection 244 are formed on the circulatory cam groove 148 shown by the broken lines in the same way as the circulatory cam groove 30 but with different configurations. The tracing portion 224 circulating in the circulatory cam groove 30 and the tracing portion 226 circulating in the circulatory cam groove 148 are arranged to be spaced apart from each other by being pressed by the groove wall surfaces.

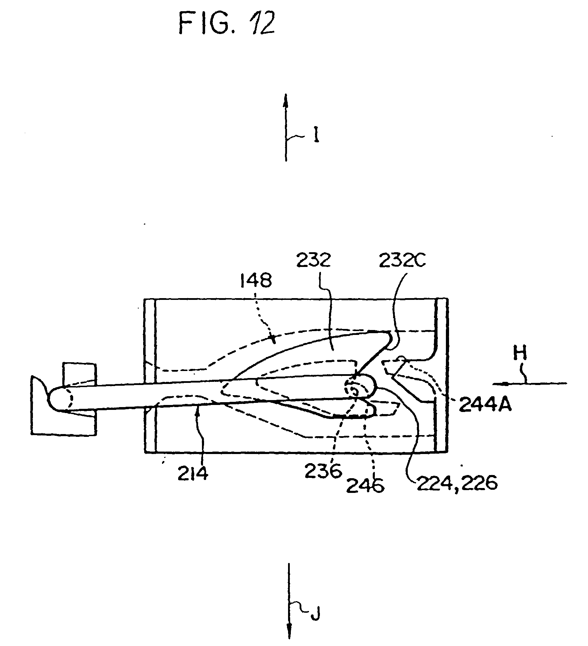

The recessed portion 236 disposed on the circulatory cam groove 30 is located at a position slightly offset in the direction of arrow G from a recessed portion 246 as seen in a plan view. This arrangement is provided to ensure that, in view of the tolerances of the tracing portions 224, 226, either one of the combinations of the tracing portion 224 and the recessed portion 236 on the one hand, and the tracing portion 226 and the recessed portion 246 on the other, is made to engage earlier than the other so as to positively lock the tracing member 214. It should be noted that since the tracing member 214 is extended by the urging force of the unillustrated compression coil, the offset of the recessed portions 236, 246 is canceled, so that the engaged tracing member 214 is supported at two points, i.e., the recessed portions 236, 246 (see Fig. 12).

In addition, although groove wall surfaces 248, 250 are formed on both sides of the circulatory cam groove 148 in an insertion direction of the tracing member 214, groove wall surfaces are not formed on the circulatory cam groove 30. The reason for this is that the tracing portion 224 is pressed against the wall surface of the heart-shaped cam 30 by the twisting force or torsion of the tracing member 214 and therefore does not move outside the circulatory cam groove 30. Even if the tracing portion 224 moves away from the heart-shaped cam 30, the tracing portion 224 is guided into an insertion portion 252 of the circulatory cam groove 30 by following the tracing portion 226 by virtue of the restoring force due to the twisting of the tracing member 214. Hence, it is unnecessary to form a groove wall surface for guiding the tracing portion 224 on the circulatory cam groove 30.

It should be noted that an insertion portion 252 of the circulatory-cam-groove fitting member 218 for the insertion of the tracing member 214 into the circulatory cam grooves 30, 248 is machined into a tapered configuration, so as to facilitate the tracing member 214.

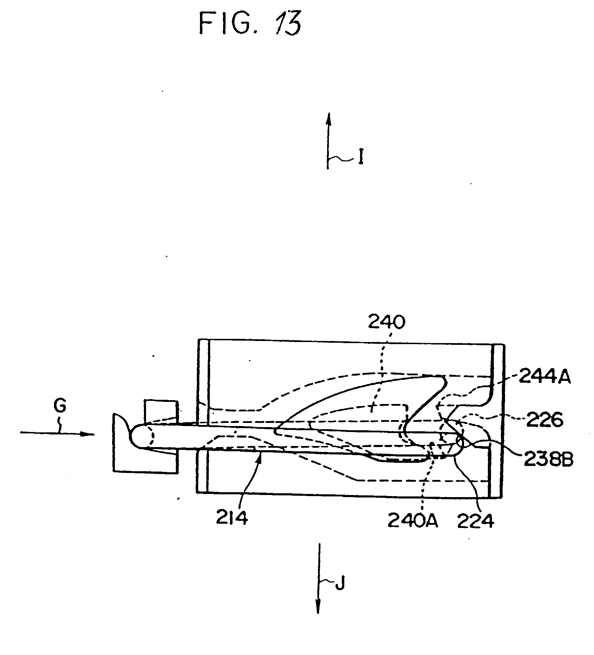

The operation of this embodiment will now be described with reference to Figs. 7 to 16.

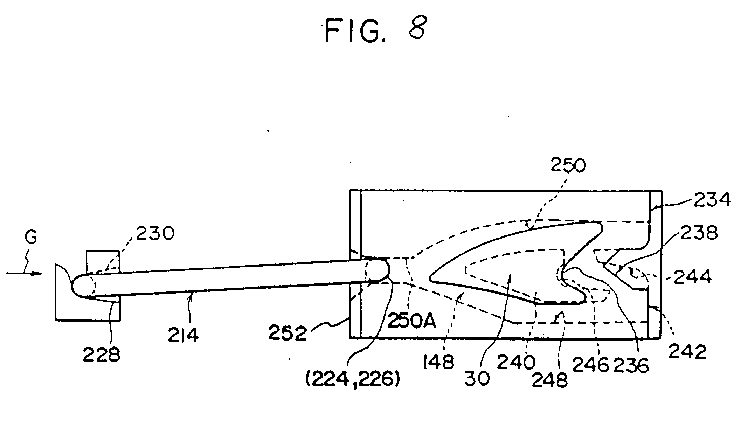

In the state shown in Fig. 7, if the front surface 212B of the ash pan case 212 is pressed in the direction of arrow G, the tracing portions 224, 226 of the tracing member 214 fixed to the rear surface of the ash pan case 212 are respectively inserted into the circulatory cam grooves 30, 148 formed in both surfaces of the circulatory-cam-groove fitting member 218 fixed to the box 216 (Fig. 8).

Furthermore, if the front surface 212B of the ash pan case 212 is pressed further in the direction of arrow G, the tracing portion 226 of the tracing member 214 is guided along the wall surface 250 of the circulatory cam groove 148. Meanwhile, since no groove wall surface is formed on the insertion portion 252 of the circulatory cam groove 30, the tracing portion 224 moves by following the tracing portion 226.

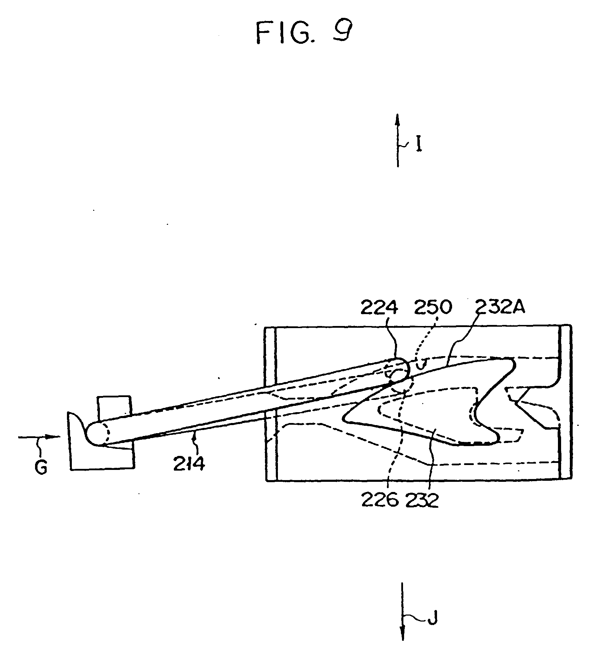

Then, as shown in Fig. 9, if the front surface 212B of the ash pan case 212 is pressed still further in the direction of arrow G, the tracing portion 226 moves in the direction of arrow J while being guided by the groove wall surface 250. Meanwhile, since the tracing portion 224 moves in the direction of arrow I while being guided by a heart-shaped cam 232A, the tracing portion 224 is gradually offset in the direction in which the tracing portions 224 and 226 are spaced apart from each other, so that a twisting force is produced in the tracing member 214.

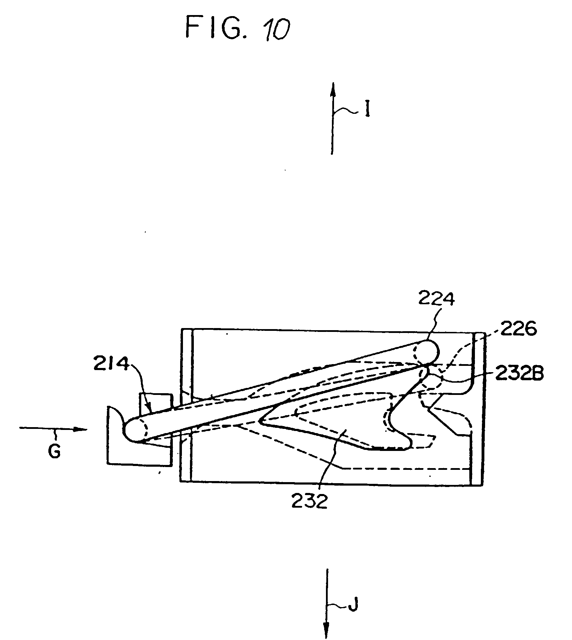

Then, as shown in Fig. 10, when the tracing portion 224 reaches an angular portion 232B of the heart-shaped cam 232, the offset between the tracing portions 224 and 226 becomes maximum, and the twisting force becomes maximum.

Then, in the state shown in Fig. 10, if the front surface 212B of the ash pan case 212 is pressed still further in the direction of arrow G, the tracing portion 224 moves in the direction of arrow J by riding over the angular portion 232B of the heart-shaped cam 232 by virtue of the torsion-restoring force. Then, the tracing portion 224 collides against a projection 238A of the groove wall surface 234 and clicks, and at the same time its positional offset with respect to the tracing portion 226 is canceled.

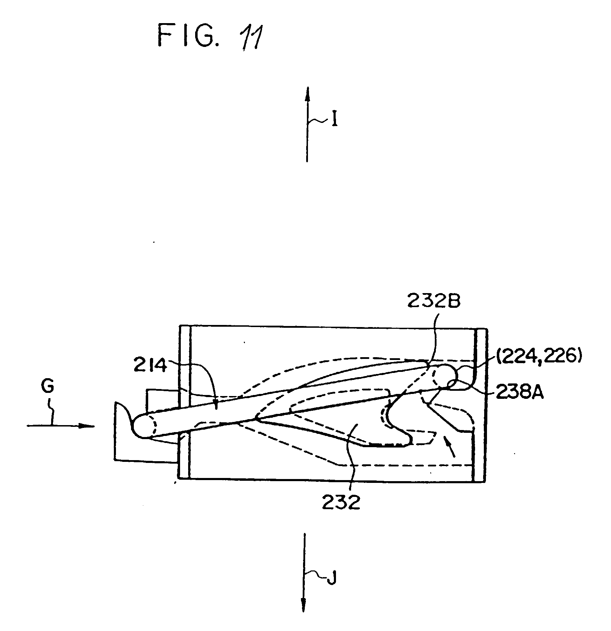

Subsequently, as shown in Figs. 11 to 12, when an overstroke portion of the pressing operation is overcome by the urging force of the unillustrated compression coil spring, the tracing member 214 moves in the direction of arrow H. At this juncture, the tracing portion 224 is guided by a wall surface 232C of the heart-shaped cam 232, while the tracing portion 226 is guided by a projecting portion 244A of the projection 244 of the circulatory cam groove 148. That is, since the tracing portions 224 and 226 are respectively pressed in the direction of arrow J and in the direction of arrow I, torsion is produced in the tracing member 214. At this juncture, if the tracing member 214 moves further in the direction of arrow H, the tracing portion 226 is disengaged from the projecting portion 244A of the groove wall surface, and its positional offset with respect to the tracing portion 224 is canceled by means of the restoring force. Consequently, the tracing portions 224, 226 whose positional offset has been canceled are guided by the wall surface 232C, and are retained at the recessed portions 236, 246.

At this juncture, since the prevention of the pulling out of the tracing member 214 is effected at two positions, i.e., the recessed portions 236, 246 on both surfaces of the circulatory-cam-groove fitting member 218, the tracing member 214 can be locked firmly.

Then, if the front surface 212B of the ash pan case 212 with the tracing member 214 in the locked state is pressed again, the tracing portion 226 and the tracing portion 224 move in the direction of arrow J while the former is being guided by a wall surface 240A of the heart-shaped cam 240 and the latter is being guided by a projection 238B of the groove wall surface. As a result, torsion is produced again in the tracing member 214. It should be noted that since the recessed portions 236, 246 are formed in such a manner as to be offset in the direction of arrow J from the tip of the projecting portion 244A on the groove wall surface, when the tracing member 214 is pressed again and an overstroke is created, the tracing portions 224, 226 are prevented from circulating in an opposite direction.

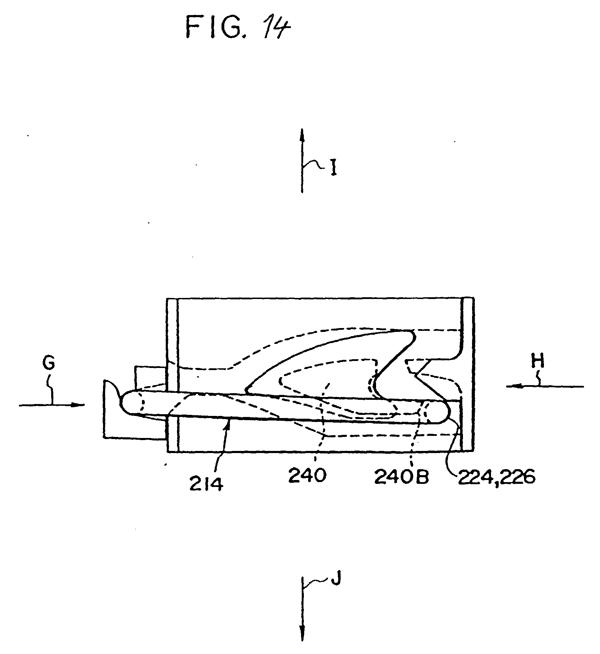

Then, if the front surface 212B of the ash pan case 212 with the tracing member 214 in the locked state is pressed further in the direction of arrow G, the tracing portion 226 rides over the tip of the wall surface 240A by means of the restoring force of the tracing member 214, cancels the positional offset with respect to the tracing portion 224, and assumes the state shown in Fig. 14.

In the state shown in Fig. 14, the overstroke of the tracing member 214 becomes maximum, and if the pressing in the direction of arrow G is canceled, the tracing member 214 is pushed back in the direction of arrow H by the urging force of the unillustrated compression coil spring. However, the tracing portion 226 is interfered by an angular portion 240B of the heart-shaped cam 240, so that it cannot move in the opposite direction to the circulating direction.

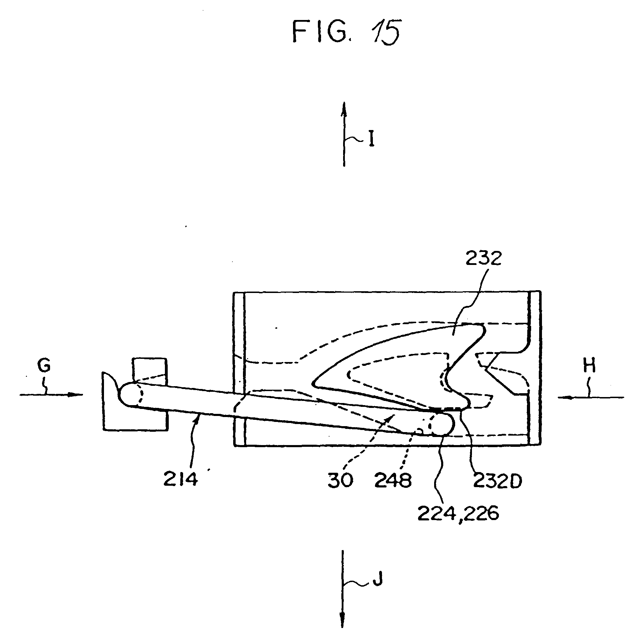

Furthermore, when the compression coil spring pushes back the tracing member 214 in the direction of arrow H as shown in Fig. 15, the tracing member 214 moves in the direction of arrow H with the tracing portions 224, 226 being guided by a wall surface 232D of the heart-shaped cam 232 and the wall surface 248 of the circulatory cam groove 30.

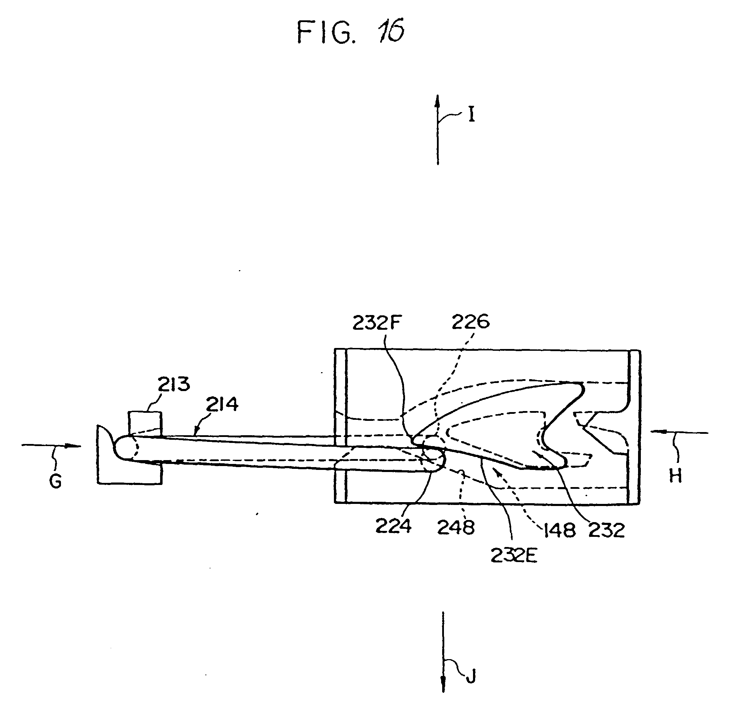

Then, as shown in Fig. 16, as the withdrawal of the tracing member 214 advances further, the tracing portion 226 moves in the direction of arrow I while being guided by the wall surface 248 of the circulatory cam groove 148. Meanwhile, since the tracing portion 224 moves in the direction of arrow J while being guided by a wall surface 232E of the heart-shaped cam 232, the positions of the tracing portions 224 and 226 are offset, whereupon a twisting force is produced again in the tracing member 214.

When the tracing portion 224 reaches a tip 232F of the heart-shaped cam 232, the positional offset between the tracing portions 224 and 226 becomes maximum, and the twisting force becomes maximum.

At this juncture, if the tracing portion 214 moves further in the direction of arrow H by being pushed back by the compression coil spring, at the same time as the tracing portion 224 leaves the tip 232F of the heart-shaped cam 232, the positional offset between the tracing portions 224 and 226 is canceled by means of the restoring force due to the twisting of the tracing member 214. When the tracing member 214 is further pulled back by the compression coil spring, the tracing member 214 leaves the circulatory cam grooves 30, 148, and the ash pan case 212 is pulled out of the box 216 (see Fig. 7).

It should be noted that although in the above-described embodiment a description has been given of a case in which the lock mechanism in accordance with the present invention is applied to a push-open type ash pan, the present invention is not restricted to the same. For instance, the lock mechanism in accordance with the present invention may be used as a means for locking an openable cover.

A description will now be given of a second embodiment of the first aspect of the present invention.

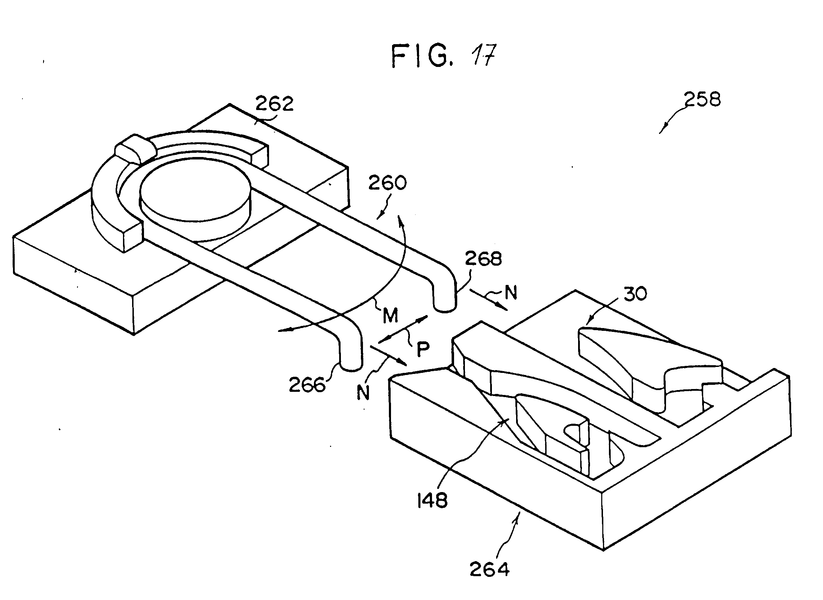

The first embodiment of the first aspect makes use of the resilient restoring force (torsion) of the tracing member 214 acting perpendicularly to the axis of the tracing member 214. In contrast, as shown in Fig. 17, this embodiment makes use of the resilient restoring force of a tracing member 260 acting parallel with the axis of a tracing member 260 so as to cause the tracing member 260 to circulate in a fixed direction.

That is, the circulatory cam grooves 30, 148 described in the first embodiment of the first aspect of the invention are provided on one surface of a circulatory-cam-groove fitting member 264, and a restoring force in a bending direction is produced in the tracing member 260 by positional offset in the direction of arrow P between tracing portions 266, 268 moving in a circulating manner after being inserted into the circulatory cam grooves 30, 148 in the direction of arrow N. By virtue of this restoring force in the bending direction, the tracing member 260 is circulated in a fixed direction.

According to this arrangement, since it is unnecessary to provide the circulatory cam grooves 30, 148 on both surfaces of the circulatory-cam-groove fitting member 264, the lock mechanism 258 can be made thin.

A description will now be given of a second aspect of the present invention.

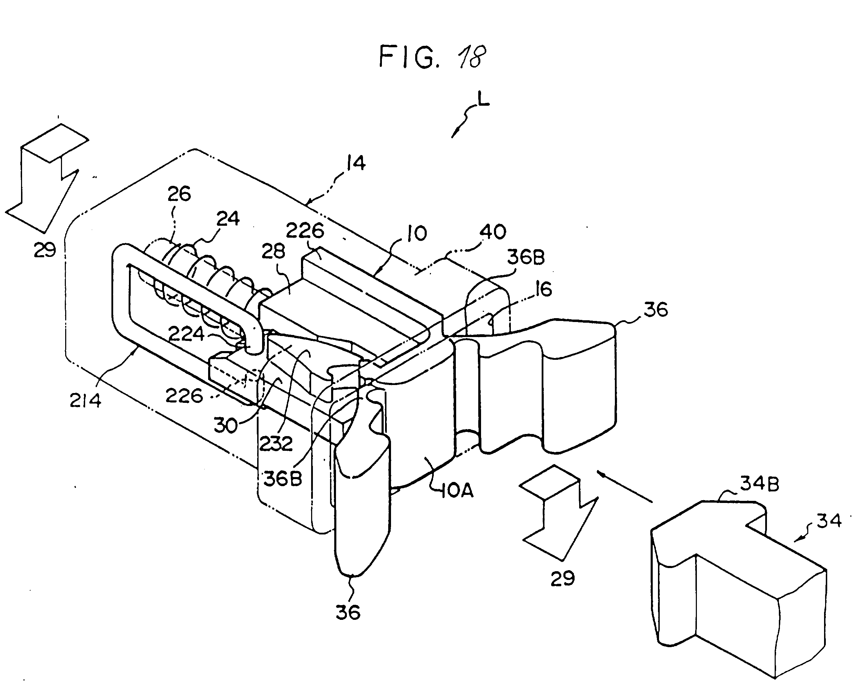

Fig. 18 shows a latch device L to which the lock mechanism 210 in accordance with the present invention is applied.

The recessed portion 28 is formed on each of the top surface 226 and the unillustrated bottom surface of the latch body 10. The circulatory cam grooves 30, 148 described in the first embodiment of the first aspect are formed on the recessed portions 28, respectively, and the tracing portions 224, 226 of the tracing member 214 are inserted into the circulatory cam grooves 30, 148, and move in a circulating manner in the circulatory cam grooves 30, 148 while being brought into contact with the wall surfaces of the circulatory cam grooves. It should be noted that in this embodiment the wall surface 248 provided on the circulatory cam groove 148 described in the first embodiment of the first aspect of the invention is not provided, and is substituted by an inner wall 14A of the housing 14 so as to make the latch device compact.

The portion of the tracing member 214 remote from the tracing portions 224, 226 is twistably fixed on the inner wall of the housing 14.

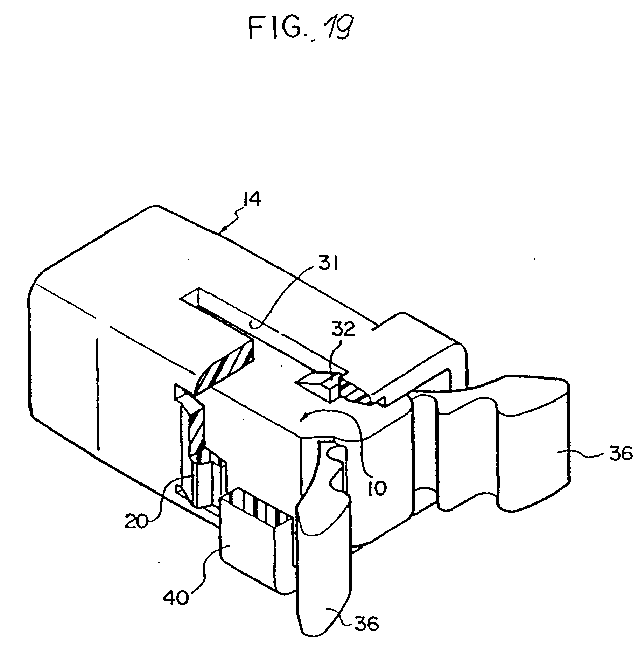

As shown in Fig. 19, the projection 32 is formed on the top surface of the latch body 10, and is fitted in the elongated guide hole 31 formed in the housing 14. As a result, as the projection 32 moves in the elongated guide hole 31, the latch body 10 is moved reciprocatively relative to the housing 14. Also, as the projection 32 is brought into contact with one end of the elongated guide hole 31, further movement of the latch body 10 in the direction in which it is pulled out is prevented against the urging force of the compression coil spring 24.

As shown in Fig. 18, the pair of arms 36 are provided on the side of the latch body 10 which is remote from the insertion side of the housing 14, and their distal ends are spaced apart from each other. The enlarged-diameter end portion 34B of the striker 34 secured to an unillustrated openable cover is inserted between the arms 36 to press the central portion 10A of the arms 36, so as to push the latch body 10 into the housing 14.

The operation of this embodiment will be described hereinunder.

Before the latch body 10 is pressed by the enlargeddiameter end portion 34B of the striker 34 (see Fig. 18), the projection 32 formed on the latch body 10 is retained at one end of the elongated guide hole 31 (see Fig. 19), so that the latch body 10 is prevented from being pulled out. At this juncture, as shown in Fig. 18, the arms 36 are in an open state, and the tracing portions 224, 226 of the tracing member 214 are at a tip portion 237 of the latch body 10.

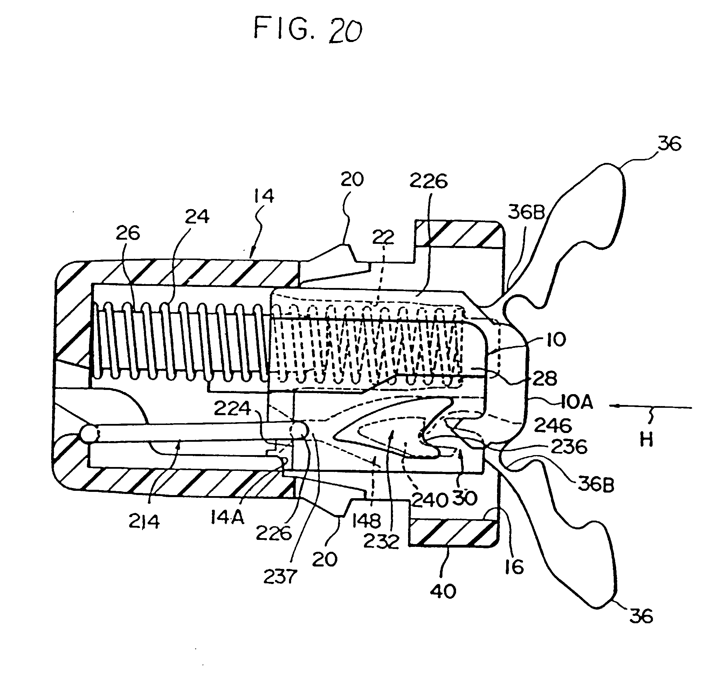

In the state shown in Fig. 20, if the central portion 10A of the arms 36 is pressed by the striker 34 to push the latch body 10 into the housing 14, the outer sides of the arms 36 are brought into contact with the rectangular frame 16, and the arms 36 rotate in the mutually approaching direction with the hinges 36B. As a result, the enlarged-diameter end portion 34B of the striker are held by the arms 36, thereby closing the openable cover.

At this juncture, the tracing portions 224, 226 of the tracing member 214 are guided along the groove wall surfaces of the circulatory cam grooves 30, 148, engage the recessed portions 236, 246, respectively, thereby preventing the latch body 10 from coming off.

It should be noted that since the operation and effect of the tracing member 214 relative to the circulatory cam grooves 30, 148, are the same as those of the first embodiment of the first aspect of the invention, a description thereof will be omitted.

Although in this embodiment stepped portions are not provided on the circulatory cam grooves 30, 148, it is possible to provide each surface of the latch body 10 with a circulatory cam groove having conventional stepped portions, and to allow the tracing member 214 of this embodiment to trace the grooves. However, in order to make the latch device compact, it is preferable not to provide the circulatory cam groove with stepped portions.

In addition, although in this embodiment the side surface portions of the distal ends of the tracing member 214 are formed as the tracing portions, if the circulatory cam grooves are formed of a hard material, the circulatory cam grooves may be traced by the end faces of the tracing member 214.

The features disclosed in the foregoing description in the claims and/or in the accompanying drawings may, both separately and in any combination thereof, be material for realising the invention in diverse forms thereof.

## Claims

1. A lock mechanism (210), which has the function of causing an openable element to engage with or disengage from a main body by pushing the element in one predetermined direction, having a first and a second lock member (213, 218; 262, 264), comprising:
a pair of circulatory guide paths (30, 148) formed on different portions of said first lock member and each having a different configuration with respect to the other; wherein each guide path has a bottom wall and side walls; and
resilient tracing means (214, 260) disposed in said second lock member, so as to alternately maintain a state of engagement with said first lock member and a state of disengagement from said first lock member upon a relative movement between said first and said second lock member,
wherein a first tracing portion (224, 268) of said resilient tracing means (214, 260) traces one guide path (30) and a second tracing portion (226, 266) of said resilient tracing means (214, 260) traces the other guide path (148), thereby being forced gradually offset relative to each other such that in said tracing means (214, 260), at least in some relative positions of said first and said second lock member, a restoring force is produced between said first (224, 268) and said second tracing portion (226, 266),
said restoring force ensuring a movement of the tracing means (214, 260) in the desired direction around the circulatory guide paths,
wherein neither of said tracing means (214, 260) is in contact with the bottom wall of its guide path (30, 148) at any relative position of said first and second lock member.

2. A lock mechanism according to claim 1, wherein said pair of tracing portions (224, 226) comprises a substantially C-shaped member (214) having opposing hooked portions, and distal end portions of said hooked portions are guided by the side walls of said guide paths.

3. A lock mechanism according to claim 2, wherein said resilient tracing means (214) is guided such that the first (224) and second tracing portions (226) are gradually forced offset, relative to each other, at least in some relative positions of said first and said second lock member, in a direction substantially perpendicular to said one predetermined direction of pushing of said openable element and perpendicular to an imaginary plane, in which said substantially C-shaped member (214) lies, whereby a fixing portion restricts the maximum offset of said first (224) and second tracing portions (226) of said substantially C-shaped member (214).

4. A lock mechanims according to one of the preceding claims, wherein said circulatory guide paths (30, 148) each comprise engaging means for engaging said resilient tracing means (214, 260).

5. A lock mechanism according to one of the preceding claims, wherein one of said circulatory guide paths (148) is defined by a projecting portion (244), and the other (30) comprises a groove portion, one tracing portion (224) being guided by a side wall of said projecting portion and the other tracing portion (226) being guided by said wall of said groove portion.

6. A lock mechanism according to one of the preceding claims, wherein said circulatory guide paths (30, 148) are formed at different levels of said first lock member, thereby providing an upper guide path (30) and a lower guide path (148), separated by a partition member formed between said upper and lower circulatory guide paths, whereby each of said tracing portions (224, 226) is adapted to trace one of said circulatory guide paths (30, 148) by the restoring force of said substantially C-shaped member (214) in a direction perpendicular to said one predetermined direction of pushing of said openable element and perpendicular to an imaginary plane, in which said substantially C-shaped member (214) lies.

7. A lock mechanism according to claim 6 as dependent on claim 2, wherein a distance between projecting ends of said hooked portions is greater than the thickness of said partition member.

8. A lock mechanism according to one of the claims 1 to 5, wherein said pair of circulatory guide paths (30, 148) are formed adjacent to each other on the same level, a partition member being formed between said pair of circulatory guide paths, and each of said tracing portions (266, 268) being adapted to trace one of said circulatory guide paths (30, 148) by the restoring force of said substantially C-shaped member in a direction substantially perpendicular to said one predetermined direction of pushing of said openable element and parallel with an imaginary plane, in which said substantially C-shaped member (260) lies.

9. A latch device for causing an openable member to engage with or disengage from a main body by pressing said member, comprising:
a housing (14) fitted on said main body;
a latch body (10) accommodated in said housing (14), said latch body (10) being retained by said housing (14) in a state in which said latch body is pushed into said housing and in a state in which said latch body is pulled into said housing; and
a lock mechanism, as claimed in one of the preceding claims, comprising:
a pair of circulatory guide paths (30, 148) formed on different portions of said latch body and each having a different configuration with respect to the other;
resilient tracing means (214, 260) disposed in said housing (14), so as to alternately maintain a state in which said latch body (10) is in a rear position within said housing (14) in one predetermined direction and a state in which said latch body (10) is in a forward position in said housing (14), by circulating in the circulatory guide paths (30, 148) each time an operation of pushing in said latch body (10) in said one predetermined direction is effected, wherein a first tracing portion (224) of said resilient tracing means (214) traces one guide path (30) and a second tracing portion (226) of said resilient tracing means (214) traces the other guide path (148), thereby being forced gradually offset relative to each other such that said tracing means (214), at least in some relative positions of said latch body (10) and said housing (14), whereby a restoring force is produced between said first (224) and said second tracing portion (226),
said restoring force ensuring a movement of the tracing means (214) only in the desired direction around the circulatory guide paths.

10. A latch device according to claim 9, wherein said pair of tracing portions (224, 226) comprise a substantially C-shaped member (214) having opposing hooked portions, and distal end portions of said hooked portions are guided by the side walls of said guide paths.

11. A latch device according to claim 10, wherein said resilient tracing means (214, 260) is guided such that the first (224) and second tracing portions (226) are gradually forced offset, relative to each other, at least in some relative positions of said latch body (10) and said housing (14), in a direction substantially perpendicular to said one predetermined direction of pushing of said openable element and perpendicular to an imaginary plane, in which said substantially C-shaped member (214) lies, whereby a fixing portion restricts the maximum offset of said first (224) and second tracing portion (226) of said substantially C-shaped member (214).

12. A latch device according to one of the claims 9 to 11, wherein said circulatory guide paths (30, 148) each comprise engaging means for engaging said resilient tracing means (214).

13. A latch device according to one of the claims 9 to 12, wherein one of said circulatory guide paths (148) is defined by a projecting portion (244), and the other (30) comprises a groove portion, the first tracing portion (224) being guided by a side wall of said projecting portion and the second tracing portion (226) being guided by said wall of said groove portion.

14. A latch device according to one of the claims 9 to 13, wherein said circulatory guide paths (30, 148) are formed at different levels of said first lock member, thereby providing an upper guide path (30) and a lower guide path (148), separated by a partition member formed between said upper and lower circulatory guide paths, whereby each of said tracing portions (224, 226) is adapted to trace one of said circulatory guide paths (30, 148) by the restoring force of said substantially C-shaped member (214) in a direction perpendicular to said one predetermined direction of pushing of said openable element and perpendicular to an imaginary plane, in which substantially C-shaped member (214) lies.

15. A latch device according to claim 14 comprising a lock mechanism according to claim 2, wherein a distance between projecting ends of said hooked portions is greater than the thickness of said partition member.

16. A latch device according to one of the claims 9 to 15, wherein a portion of said guide paths is constituted by said housing (14).

## Patentansprüche

1. Verschlußmechanismus (10), der die Funktion hat, zu bewirken, daß ein zu öffnendes Elementes in einem Hauptkörper liegt oder aus diesem freigesetzt wird, indem das Element in einer vorbestimmten Richtung gedrückt wird, mit einem ersten und einem zweiten Verriegelungselement (213, 218; 262, 264), mit:
- einem Paar umlaufender Führungswege (30, 148), die auf unterschiedlichen Abschnitten des ersten Verriegelungselementes gebildet sind und jeder eine unterschiedliche Ausgestaltung in beSpurfolge auf den anderen hat; wobei jeder Führungsweg eine Bodenwand und Seitenwände hat; und
- federnde Spurfolgeeinrichtungen (214, 260), die in dem zweiten Verriegelungselement angeordnet sind, um so abwechselnd einen Eingriffszustand mit dem ersten Verriegelungselement und einen Freigabezustand von dem ersten Verriegelungselement aufgrund einer relativen Bewegung zwischen dem ersten und zweiten Verriegelungselement einzuhalten,
wobei ein erster Spurfolgeabschnitt (224, 268) der federnden Spurfolgeeinrichtung (214, 260) einem Führungsweg (30) folgt und ein zweiter Spurfolgeabschnitt (226, 266) der federnden Spurfolgeeinrichtung (214, 260) dem anderen Führungsweg (148) folgt, so daß sie nach und nach relativ zueinander versetzt gezwungen werden, derart, daß in der Spurfolgeeinrichtung (214, 260), wenigstens in einigen relativen Positionen des ersten und zweiten Verriegelungselementes, eine Rückstellkraft zwischen dem ersten (224, 268) und dem zweiten Spurfolgeabschnitt (226, 266) erzeugt wird,
wobei die Rückstellkraft eine Bewegung der Spurfolgeeinrichtung (214, 260) in der gewünschten Richtung um die umlaufenden Führungswege sicherstellt,
wobei keine der Spurfolgeeinrichtungen (214, 260) in Kontakt mit der Bodenwand seines Führungsweges (30, 148) in irgendeiner relativen Position des ersten und zweiten Verriegelungselementes ist.

2. Verschlußmechanismus nach Anspruch 1, bei dem das Paar der Spurfolgeabschnitte (224, 226) ein im wesentlichen C-formiges Element (214) mit gegenüberliegenden Hakenabschnitten aufweist und distale Endabschnitte der Hakenabschnitte von den Seitenwänden der Führungswege geführt werden.

3. Verschlußmechanismus nach Anspruch 2, bei dem die federnde Spurfolgeeinrichtung (214) so geführt wird, daß der erste (224) und zweite Spurfolgeabschnitt (226) nach und nach versetzt relativ zueinander gezwungen werden, wenigstens in einigen relativen Positionen des ersten und des zweiten Verriegelungselementes, in eine Richtung im wesentlichen senkrecht zu der einen vorbestimmten Schieberichtung des zu öffnenden Elementes und senkrecht zu einer imaginären Ebene, in der das im wesentlichen C-förmige Element (214) liegt, wobei ein fixierender Abschnitt die maximale Versetzung des ersten (224) und des zweiten Spurfolgeabschnitts (226) des im wesentlichen C-förmigen Elementes (214) beschränkt.

4. Verschlußmechanismus nach einem der vorangehenden Ansprüche, wobei die umlaufenden Führungswege (30, 148) jeweils Eingriffseinrichtungen zum Greifen der federnden Spurfolgeeinrichtungen (214, 260) aufweisen.

5. Verschlußmechanismus nach einem der vorangehenden Ansprüche, bei dem einer der umlaufenden Führungswege (148) durch einen hervorstehenden Abschnitt (224) definiert ist und der andere (30) einen Nutenabschnitt aufweist, wobei ein Führungsabschnitt (224) von einer Seitenwand des hervorstehenden Abschnittes geführt wird und der andere Spurfolgeabschnitt (226) von der Wand des Nutenabschnittes geführt wird.

6. Verschlußmechanismus nach einem der vorangehenden Ansprüche, bei dem die umlaufenden Führungswege (30, 148) auf unterschiedlichen Niveaus des ersten Verriegelungselementes gebildet sind, so daß ein oberer Führungsweg (30) und ein unterer Führungsweg (148) zur Verfügung gestellt werden, die durch ein Teilungselement getrennt sind, das zwischen dem oberen und unteren umlaufenden Führungsweg gebildet ist, wobei jeder der Spurfolgeabschnitte (224, 226) so ausgelegt ist, daß er einem der umlaufenden Führungswege (30, 148) durch die Rückstellkraft des im wesentlichen C-förmigen. Elementes (214) in einer Richtung senkrecht zu der einen vorbestimmten Schieberichtung des zu öffnenden Elementes und senkrecht zu einer imaginären Ebene, in der das im wesentlichen C-förmige Element (214) liegt, folgt.

7. Verschlußmechanismus nach Anspruch 6, soweit von Anspruch abhängig, bei dem ein Abstand zwischen hervorstehenden Enden der Hakenabschnitte größer ist als die Dicke des Teilungselementes.

8. Verschlußmechanismus nach einem der Ansprüche 1 bis 5, bei dem das Paar umlaufender Führungswege (30, 148) benachbart zueinander auf demselben Niveau gebildet ist, wobei ein Teilungselement zwischen dem Paar der umlaufenden Führungswege gebildet ist und jeder der Spurfolgeabschnitte (266, 268) so ausgelegt ist, daß er einem der umlaufenden Führungswege (30, 158) durch die wiederherstellende Kraft des im wesentlichen C-förmigen Elementes in eine Richtung im wesentlichen senkrecht zu der einen vorbestimmten Schieberichtung des zu öffnenden Elementes und parallel zu einer imaginären Ebene, in der das im wesentlichen C-förmige Element (260) liegt, folgt.

9. Verriegelungsvorrichtung, die bewirkt, daß ein zu öffnendes Element in einem Hauptkörper einliegt oder daraus freigegeben wird, indem das Element gedrückt wird, mit:
einem Gehäuse (14), das über dem Hauptkörper sitzt;
einem Verriegelungskörper (10), der in dem Gehäuse (14) untergebracht ist, wobei der Verriegelungskörper (10) durch das Gehäuse (14) in einem Zustand, in dem der Verriegelungskörper in das Gehäuse geschoben ist, und in einem Zustand, in dem der Verriegelungskörper in das Gehäuse gezogen wird, gehalten wird, und
einem Verschlußmechanismus, wie in einem der vorangehenden Ansprüche beansprucht, mit:
einem Paar umlaufender Führungswege (30, 148), die auf unterschiedlichen Abschnitten des Verriegelungskörpers gebildet sind und jeweils eine unterschiedliche Ausgestaltung in beSpurfolge auf den anderen haben;
federnden Spurfolgeeinrichtungen (214, 260), die in dem Gehäuse (14) angeordnet sind, um so abwechselnd einen Zustand zu halten, in dem der Verriegelungskörper (10) in einer hinteren Position innerhalb des Gehäuses (14) in einer vorbestimmten Richtung ist, und einem Zustand, in dem der Verriegelungskörper (10) in einer vorderen Position in dem Gehäuse (14) ist, indem in den umlaufenden Führungswegen (30, 148) umgelaufen wird, jedesmal, wenn eine Schiebeoperation in dem Verriegelungskörper (10) in der einen vorbestimmten Richtung bewirkt wird, wobei ein erster Spurfolgeabschnitt (224) der federnden Spurfolgeeinrichtung (214) einem Führungsweg (30) folgt und ein zweiter Spurfolgeabschnitt (226) der federnden Spurfolgeeinrichtung (214) dem anderen Führungsweg (148) folgt, so daß sie nach und nach versetzt relativ zueinander derart gezwungen werden, wenigstens in einigen relativen Positionen des Verriegelungskörpers (10) und des Gehäuses (14), wodurch eine Rückstellkrraft zwischen dem ersten (224) und dem zweiten Spurfolgeabschnitt (226) hergestellt wird,
wobei die Rückstellkraft eine Bewegung der Spurfolgeeinrichtung (214) nur in die gewünschte Richtung um die umlaufenden Führungswege sicherstellt.

10. Verriegelungsvorrichtung nach Anspruch 9, bei der das Paar Spurfolgeabschnitte (224, 226) ein im wesentlichen C-förmiges Element (214) mit gegenüberliegenden Hakenabschnitten aufweist, und distale Endabschnitte der Hakenabschnitte durch die Seitenwände der Führungswege geführt werden.

11. Verriegelungsvorrichtung nach Anspruch 10, bei der die federnde Spurfolgeeinrichtung (214, 260) so geführt ist, daß der erste (224) und zweite Spurfolgeabschnitt (226) nach und nach voneinander versetzt gezwungen werden, relativ zu einander, wenigstens an einigen relativen Positionen des Verriegelungskörpers (10) und des Gehäuses (14), in eine Richtung im wesentlichen senkrecht zu der einen vorbestimmten Schieberichtung des zu öffnenden Elementes und senkrecht zu einer imaginären Ebene, in der das im wesentlichen C-förmige Element (214) liegt, wobei ein fixierender Abschnitt die maximale Versetzung des ersten (224) und des zweiten Spurfolgeabschnittes (226) des im wesentlichen C-förmigen Elementes (214) begrenzt.

12. Verriegelungsvorrichtung nach einem der Ansprüche 9 bis 11, bei der die umlaufenden Führungswege (30, 148) jeweils Eingriffseinrichrungen zum Greifen der nachgiebigen Spurfolgeeinrichtung (214) aufweisen.

13. Verriegelungsvorrichtung nach einem der Ansprüche 9 bis 12, bei der einer der umlaufenden Führungswege (148) durch einen hervorstehenden Abschnitt (244) definiert ist und der andere (30) einen Nutenabschnitt aufweist, wobei der erste Spurfolgeabschnitt (224) von einer Seitenwand des hervorstehenden Abschnittes geführt wird und der zweite Spurfolgeabschnitt (226) von der Wand des Nutenabschnittes geführt wird.

14. Verriegelungsvorrichtung nach einem der Ansprüche 9 bis 13, bei der die umlaufenden Führungswege (30, 148) auf unterschiedlichen Niveaus des ersten Verriegelungselementes gebildet sind, so daß ein oberer Führungsweg (30) und ein unterer Führungsweg (148) zur Verfügung gestellt werden, getrennt durch ein Teilungselement, das zwischen dem oberen und dem unteren umlaufenden Führungsweg gebildet ist, wobei jeder der Spurfolgeabschnitte (224, 226) so ausgelegt ist, daß er einem der umlaufenden Führungswege (30, 148) folgt, durch die Rückstellkraft des im wesentlichen C-förmigen Elementes (214) in einer Richtung senkrecht zu der einen vorbestimmten Schieberichtung des zu öffnenden Elementes und senkrecht zu einer imaginären Ebene, in der das im wesentlichen C-förmige Element (214) liegt.

15. Verriegelungsvorrichtung nach Anspruch 14, mit einem Verschlußmechanismus nach Anspruch 2, bei der ein Abstand zwischen hervorstehenden Enden der Hakenabschnitte größer ist als die Dicke des Teilungselementes.

16. Verriegelungsvorrichtung nach einem der Ansprüche 9 bis 15, bei der ein Teil der Führungswege durch das Gehäuse (14) gebildet ist.

## Revendications

1. Mécanisme de verrouillage (210) qui a pour fonction d'amener un élément ouvrant à se mettre en prise ou hors de prise avec un corps principal par poussée de l'élément dans une direction prédéterminée, ayant un premier et un deuxième organe de verrouillage (213, 218 ; 262, 264), et comprenant
une paire de pistes de guidage de circulation (30, 148) formées sur différentes portions dudit premier organe de verrouillage, et ayant chacune une configuration différente de celle de l'autre, où chaque piste de guidage présente une paroi de fond et des parois latérales ; et
des moyens suiveurs élastiques (214, 260) disposés dans ledit deuxième organe de verrouillage de manière à maintenir alternativement un état de prise avec ledit premier organe de verrouillage et un état hors de prise par rapport audit premier organe de verrouillage en réponse à un mouvement relatif entre ledit premier et ledit deuxième organe de verrouillage,
où une première portion suiveuse (224, 268) desdits moyens suiveurs élastiques (214, 260) suit une piste de guidage (30) et une deuxième portion suiveuse (226, 266) desdits moyens suiveurs élastiques (214, 260) suit l'autre piste de guidage (148), en étant ainsi progressivement décalées à force l'une par rapport à l'autre, de sorte que, dans lesdits moyens suiveurs (214, 260), au moins dans certaines positions relatives dudit premier et dudit deuxième organe de verrouillage, une force de rappel est produite entre ladite première (224, 268) et ladite deuxième portion suiveuse (226, 266),
ladite force de rappel déterminant un mouvement des moyens suiveurs (214, 260) dans le sens souhaité sur le tour de la piste de guidage en circulation,
où aucun desdits moyens suiveurs (214, 260) n'est en contact avec la paroi de fond de sa piste de guidage (30, 148) dans aucune position relative dudit premier et dudit deuxième organe de verrouillage.

2. Mécanisme de verrouillage selon la revendication 1, dans lequel ladite paire de portion suiveuse (224, 226) comprend un organe (214) à peu près en forme de C ayant des portions en crochet opposées, et des portions d'extrémités distales desdites portions en crochet sont guidées par les parois latérales desdites pistes de guidage.

3. Mécanisme de verrouillage selon la revendication 2, dans lequel ledit moyen suiveur élastique est guidé de telle manière que les première (224) et deuxième portions suiveuses (226) soient progressivement décalées à force l'une par rapport à l'autre, au moins dans certaines positions relatives dudit premier et dudit deuxième organe de verrouillage dans une direction à peu près perpendiculaire à ladite une direction prédéterminée de poussée dudit élément ouvrant et perpendiculaire à un plan imaginaire dans lequel se trouve ledit organe (214) à peu près en forme de C, de sorte qu'une portion fixe restreint le décalage maximum desdites première (224) et deuxième portions suiveuses (226) dudit organe (214) à peu près en forme de C.

4. Mécanisme de verrouillage selon une des revendications précédentes, dans lequel lesdites pistes de guidage de circulation (30, 148) comprennent chacune des moyens de prise pour entrer en prise avec lesdits moyens suiveurs élastiques (214, 260).

5. Mécanisme de verrouillage selon une des revendications précédentes, dans lequel l'une desdites pistes de guidage de circulation (148) est définie par une portion saillante (244) et l'autre (30) comprend une portion en rainure, une portion suiveuse (224) étant guidée par une paroi latérale de ladite portion saillante et l'autre portion suiveuse (226) étant guidée par ladite paroi de la portion en rainure.

6. Mécanisme de verrouillage selon une des revendications précédentes, dans lequel lesdites pistes de guidage à circulation (30, 148) sont formées à différents niveaux dudit premier organe de verrouillage, en formant ainsi une piste de guidage supérieure (30) et une piste de guidage inférieure (148), séparées par un organe séparateur formé entre lesdites pistes de guidage de circulation supérieure et inférieure, de sorte que chacune des portions suiveuses (224, 226) est adaptée pour suivre une desdites pistes de guidage de circulation (30, 148) sous l'effet de la force de rappel dudit organe (214) à peu près en forme de C, dans une direction perpendiculaire à ladite une direction prédéterminée de poussée dudit élément ouvrant et perpendiculaire à un plan imaginaire dans lequel se trouve ledit organe à peu près en forme de C (214).

7. Mécanisme de verrouillage selon la revendication 6 lorsqu'elle dépend de la revendication 2, dans lequel une distance entre les extrémités saillantes desdites portions en crochet est plus grande que l'épaisseur dudit organe séparateur.

8. Mécanisme de verrouillage selon une des revendications 1 à 5, dans lequel ladite paire de pistes de guidage de circulation (30, 148) sont formées adjacentes l'une à l'autre au même niveau, un organe séparateur étant formé entre ladite paire de pistes de guidage de circulation, et chacune des portions suiveuses (266, 268) est adaptée pour suivre une desdites pistes de guidage de circulation (30, 148) sous l'effet de la force de rappel dudit organe à peu près en forme de C, dans une direction à peu près perpendiculaire à ladite une direction prédéterminée de poussée dudit élément ouvrant et parallèle à un plan imaginaire dans lequel se trouve ledit organe à peu près en forme de C (260).

9. Dispositif de verrou destiné à amener un élément ouvrant à se mettre en prise ou hors de prise avec un corps principal par une action de pression dudit organe, comprenant :
un boîtier (14) monté sur ledit corps principal ;
un corps de verrou (10) logé dans ledit boîtier (14), ledit corps de verrou (10) étant retenu par ledit boîtier (14) dans un état dans lequel ledit corps de verrou est poussé dans ledit boîtier et un état dans lequel ledit corps de verrou est tiré dans ledit boîtier ; et
un mécanisme de verrouillage selon une quelconque des revendications précédentes, comprenant :
une paire de pistes de guidage de circulation (30, 148) formées sur différentes portions dudit corps de verrou, et ayant chacune une configuration différente de celle de l'autre ;
des moyens suiveurs élastiques (214, 260) disposés dans ledit boîtier (14) de manière à maintenir alternativement un état dans lequel ledit corps de verrou (10) est dans une position arrière dans ledit boîtier (14) dans une direction prédéterminée et un état dans lequel ledit corps de verrou (10) est dans une position avant dans ledit boîtier (14) par circulation dans les pistes de guidage de circulation (30, 148) chaque fois qu'une opération de poussée dans ledit corps de verrou (10) dans ladite une direction prédéterminée est exécutée, où une première portion suiveuse (224) desdits moyens suiveurs élastiques (214) suit une piste de guidage (30) et une deuxième portion suiveuse (226) desdits moyens suiveurs élastiques (214) suit l'autre piste de guidage (148), en étant ainsi progressivement décalées à force l'une par rapport à l'autre, de sorte que lesdits moyens suiveurs (214) sont tordus, au moins dans certaines positions relatives dudit corps de verrou (10) et dudit boîtier (14), de sorte qu'une force de rappel est produite entre ladite première (224) et ladite deuxième portion suiveuse (226),
ladite force de rappel déterminant un mouvement des moyens suiveurs (214) seulement dans le sens souhaité sur le tour des pistes de guidage en circulation,

10. Dispositif de verrou selon la revendication 9, dans lequel ladite paire de portions suiveuses (224, 226) comprend un organe (214) à peu près en forme de C ayant des portions en crochet opposées, et des portions d'extrémités distales desdites portions en crochet sont guidées par les parois latérales desdites pistes de guidage.

11. Dispositif de verrou selon la revendication 10, dans lequel ledit moyen suiveur élastique (214, 260) est guidé de telle manière que les première (224) et deuxième portions suiveuses (226) sont progressivement décalées à force l'une par rapport à l'autre, au moins dans certaines positions relatives dudit corps de verrou (10) et dudit boîtier (14) dans une direction à peu près perpendiculaire à ladite une direction prédéterminée de poussée dudit élément ouvrant et perpendiculaire à un plan imaginaire dans lequel se trouve ledit organe (214) à peu près en forme de C, de sorte qu'une portion fixe restreint le décalage maximum desdites première (224) et deuxième portions suiveuses (226) dudit organe (214) à peu près en forme de C.

12. Dispositif de verrou selon une des revendications 9 à 11, dans lequel lesdites pistes de guidage de circulation (30, 148) comprennent chacune des moyens de prise pour entrer en prise avec lesdits moyens suiveurs élastiques (214).

13. Dispositif de verrou selon une des revendications 9 à 12, dans lequel l'une desdites pistes de guidage de circulation (148) est définie par une portion saillante (244) et l'autre (30) comprend une portion en rainure, la première portion suiveuse (224) étant guidée par une paroi latérale de ladite portion saillante et la deuxième portion suiveuse (226) étant guidée par ladite paroi de ladite portion rainure.

14. Dispositif de verrou selon une des revendications 9 à 13, dans lequel lesdites pistes de guidage à circulation (30, 148) sont formées à différents niveaux dudit premier organe de verrouillage, en formant ainsi une piste de guidage supérieure (30) et une piste de guidage inférieure (148), séparées par un organe séparateur formé entre lesdites pistes de guidage de circulation supérieure et inférieure, de sorte que chacune des portions suiveuses (224, 226) est adaptée pour suivre une desdites pistes de guidage de circulation (30, 148) sous l'effet la force de rappel dudit organe (214) à peu près en forme de C, dans une direction perpendiculaire à ladite une direction prédéterminée de poussée dudit élément ouvrant et perpendiculaire à un plan imaginaire dans lequel se trouve ledit organe à peu près en forme de C (214).

15. Dispositif de verrou selon la revendication 14, comprenant un mécanisme de verrouillage selon la revendication 2, dans lequel une distance entre les extrémités saillantes desdites portions en crochet est plus grande que l'épaisseur dudit organe séparateur.

16. Dispositif de verrou selon une des revendications 9 à 25, dans lequel une portion desdites pistes de guidage est constituée par ledit boîtier.
